# EUROPEAN PATENT APPLICATION

(11) **EP 2 280 442 A1**
(43) Date of publication of application: **02.02.2011**
(21) Application number: 09750349.4
(22) Date of filing: 15.05.2009
(51) Int. Cl.: H01M 8/24, H01M 8/10, H01M 8/12, B65D 19/38

(54) **FUEL CELL AND METHOD FOR DIASSEMBLING THE SAME**

(30) Priority: 19.05.2008 JP 2008130695
(71) Applicant: Panasonic Corporation, Kadoma-shi Osaka 571-8501 (JP)
(72) Inventor: UNOKI, Shigeyuki, 1-61 Shiromi 2-chome, Chuo-ku, Osaka-shi, Osaka 540-6207 (JP); YASUMOTO, Eiichi, 1-61 Shiromi 2-chome, Chuo-ku, Osaka-shi, Osaka 540-6207 (JP); SHIBATA, Soichi, 1-61 Shiromi 2-chome, Chuo-ku, Osaka-shi, Osaka 540-6207 (JP); KUSAKABE, Hiroki, 1-61 Shiromi 2-chome, Chuo-ku, Osaka-shi, Osaka 540-6207 (JP)
(74) Representative: Leinweber & Zimmermann
(86) International application number: PCT/JP2009/002154
(87) International publication number: WO 2009/141987

(57) **Abstract**

A fuel cell (10) of the present invention includes: two end plates (18) respectively disposed on both sides of a cell stack (12) in a stack direction; a fastening band (22) configured to fasten the cell stack (12) and the end plates (18) in the stack direction; a connecting portion (24) configured to connect one end portion (22e) and the other end portion (22f) of the fastening band (22); and a displacement restricting portion (26) disposed on at least one of the end plates (18) to restrict displacement of the fastening band (22) in a direction away from a surface (18c) of the end plate (18).

## Description

### Technical Field

The present invention relates to a fuel cell in which a cell stack that is a stack body of cells is fastened by a fastening band, and a method for disassembling such fuel cell.

### Background Art

A cell stack of a common fuel cell is configured by stacking a plurality of cells (unit cells) as disclosed in PTL 1, and a current collector, an insulating plate, and an end plate are disposed on each of both sides of the cell stack in a stack direction. Then, a stack body including the cell stack, the current collectors, the insulating plates, and the end plates is fastened by fastening rods (bolts and nuts) in the stack direction. Thus, electrical connections among the cells are maintained.

However, in such fastening structure using the fastening rods (bolts and nuts), heads and tip end portions of the bolts, and nuts project from the surface of the end plate, and the problem is that the size of the fuel cell increases.

Therefore, various technologies have been developed in recent years to reduce the size of the fuel cell by reducing the size of the fastening structure of the cell stack. For example, each of PTLs 2 and 3 discloses a technology in which the cell stack is fastened by using a thin fastening band. In addition, PTL 3 discloses a technology in which both end portions of the fastening band are connected to each other by using a small connecting portion, such as a turnbuckle or a latch.

### Citation List

### Patent Literature

PTL 1: Japanese Laid-Open Patent Application Publication No. 2007-59187
PTL 2: Published Japanese Translation of PCT Application No. 2001-504632
PTL 3: Japanese Laid-Open Patent Application Publication No. 2007-73509

### Summary of Invention

### Technical Problem

In the case of using the fastening band (PTLs 2 and 3) to fasten the cell stack, the end plates, and the like, the fastening band does not project so much from the surface of the end plate, and both end portions of the fastening band can be connected to each other by the small connecting portion (such as the turnbuckle or the latch). Therefore, the size of the fuel cell can be reduced.

However, in a case where the connection between both end portions of the fastening band is released or the fastening band is cut, the fastening band vigorously snaps by "an elastic force (elastic repulsive force) of the cell stack" or "an elastic force of the fastening band itself". Therefore, a conventional problem is that the snapped fastening band breaks components positioned around the cell stack.

### Solution to Problem

In order to solve the above problems, a fuel cell according to the present invention includes: a cell stack configured by stacking a plurality of cells; two end plates respectively disposed on both sides of the cell stack in a stack direction; a fastening band configured to fasten the cell stack and the end plates in the stack direction; a connecting portion configured to connect one end portion and the other end portion of the fastening band; and a displacement restricting portion provided on at least one of the end plates to restrict displacement of the fastening band in a direction away from a surface of the end plate.

In this configuration, in a case where the connecting portion loosens and the connection between both end portions of the fastening band is released or in a case where the fastening band is cut, a portion of the fastening band which portion is located on the surface of the end plate tends to displace in the direction away from the surface of the end plate by " the elastic force of the cell stack" or "the elastic force of the fastening band itself". However, since the displacement of the fastening band in the direction away from the surface of the end plate is restricted by the displacement restricting portion, the fastening band does not vigorously snap in such direction.

A groove-shaped concave portion may be formed on a surface of at least one of the end plates, and the fastening band may be disposed to fit in the concave portion.

In this configuration, since the displacement of the fastening band in a width direction is restricted such that the side surface of the fastening band contacts the inner side surface of the concave portion, the positioning of the fastening band can be easily carried out on the surface of the end plate, and the positioning error of the fastening band in the width direction can be prevented.

The displacement restricting portion may be formed to cover at least a part of a surface of the fastening band.

In this configuration, if the fastening band tends to displace in the direction away from the surface of the end plate, at least a part of the surface of the fastening band contacts the displacement restricting portion, and this restricts the displacement of the fastening band.

The displacement restricting portion may be formed integrally with the end plate.

In this configuration, since the displacement restricting portion and the end plate are integrally formed, they can be manufactured easily at low cost by integral molding, such as injection molding.

The fastening band may be provided with a stopper portion configured to be stopped by the displacement restricting portion to restrict the displacement of the fastening band in a direction parallel to the surface of the end plate.

In this configuration, since the stopper portion of the fastening band is stopped by the displacement restricting portion, the displacement of the fastening band in the direction parallel to the surface of the end plate is restricted.

The connecting portion may be provided with a stopper portion configured to be stopped by the displacement restricting portion to restrict the displacement of the fastening band in a direction parallel to the surface of the end plate.

In this configuration, since the stopper portion of the connecting portion is stopped by the displacement restricting portion, the displacement of the fastening band in the direction parallel to the surface of the end plate is restricted.

A groove-shaped concave portion having a square cross section may be formed on a surface of at least one of the end plates, the fastening band may be a band-shaped member having a square cross section and disposed to fit in the concave portion, and the displacement restricting portion may include a facing portion having a planar facing surface facing at least a part of a surface of the fastening band and two coupling portions configured to couple the end plate and both end portions of the facing portion in a direction intersecting with the concave portion.

In this configuration, when the fastening band displaces, the lower surface of the fastening band contacts the bottom surface of the concave portion, the surface of the fastening band contacts the facing surface of the facing portion, and the side surface of the fastening band contacts the inner side surface of the concave portion. Therefore, it is possible to weaken the power of the displacement of the fastening band by the frictional forces generated by the surface contact.

A groove-shaped concave portion having a square cross section may be formed on a surface of at least one of the end plates, the fastening band may be a band-shaped member having a square cross section and disposed to fit in the concave portion, the displacement restricting portion may include a facing portion having a planar facing surface facing at least a part of a surface of the fastening band and a coupling portion configured to couple the end plate and one end portion of the facing portion in a direction intersecting with the concave portion, and an introducing port through which the fastening band is introduced into the concave portion may be formed between the other end portion of the facing portion and the surface of the end plate.

In this configuration, since the introducing port through which the fastening band is introduced into the concave portion is formed between the other end portion of the facing portion and the surface of the end plate, the fastening band provided on the surface of the end plate can be moved in the width direction to be introduced through the introducing port into the concave portion. Therefore, it is unnecessary to cause the end portion of the fastening band to pass through the lower space of the facing portion. Even in a case where the connecting portion is formed integrally at the end portion of the fastening band, the height of the connecting portion is not limited by the height of the lower space, and the "connecting portion" can be designed freely.

A pipe member through which a gas or a cooling medium is supplied to the plurality of cells may be connected to at least one of the end plates, and at least a part of the displacement restricting portion may be constituted by the pipe member.

In this configuration, at least a part of the displacement restricting portion can be easily configured by the pipe member at low cost.

The pipe member may be a pipe or a pipe joint having a facing portion facing at least a part of the surface of the fastening band. Moreover, the pipe member may be a pipe or a pipe joint, and a facing member facing at least a part of the surface of the fastening band may be attached to the pipe or the pipe joint.

In order to solve the above problems, a method for disassembling a fuel cell according to the present invention is a method for disassembling a fuel cell including a cell stack configured by stacking a plurality of cells, two end plates respectively disposed on both sides of the cell stack in a stack direction, a fastening band configured to fasten the cell stack and the end plates in the stack direction, and a connecting portion configured to connect one end portion and the other end portion of the fastening band, the method comprising the steps of: disposing on at least one of the end plates a displacement restricting portion configured to restrict displacement of the fastening band in a direction away from a surface of the end plate; and releasing the connection between said one end portion and the other end portion of the fastening band at the connecting portion while restricting the displacement of the fastening band by the displacement restricting portion.

In this configuration, since the displacement restricting portion can prevent the fastening band from vigorously snapping in the direction away from the surface of the end plate, the safety of the disassembling work can be improved. In addition, since the displacement restricting portion can be disposed on the end plate only when disassembling the fuel cell, it is unnecessary to dispose the displacement restricting portion on the end plate in advance, and this can reduce the manufacturing cost of the fuel cell.

The above object, other objects, features, and advantages of the present invention will be made clear by the following detailed explanation of preferred embodiments with reference to the attached drawings.

### Advantageous Effects of Invention

The present invention is configured as above, and even if the connecting portion loosens and the connection between both end portions of the fastening band is released or even if the fastening band is cut, the displacement of the fastening band in the direction away from the surface of the end plate is restricted by the displacement restricting portion. Therefore, the fastening band does not vigorously snap in such direction. On this account, it is possible to prevent accidents, such as breakdown of components positioned around the cell stack by the snapped fastening band and also possible to provide a fuel cell which is small in size, light in weight, and high in safety.

### Brief Description of Drawings

[Fig. 1] Fig. 1 is a perspective view showing the configuration of a fuel cell according to Embodiment 1.
[Fig. 2] Fig. 2 is a front view showing the configuration of the fuel cell according to Embodiment 1.
[Fig. 3] Fig. 3 is a plan view showing the configuration of the fuel cell according to Embodiment 1.
[Fig. 4] Fig. 4 is a partial cross-sectional view taken along line IV-IV of Fig. 3.
[Fig. 5] Fig. 5 is a partially enlarged view of Fig. 4.
[Fig. 6] Fig. 6 is an exploded view showing a connecting portion in Embodiment 1.
[Fig. 7] Fig. 7 is a perspective view showing a stopper portion which stops by a displacement restricting portion.
[Figs. 8] Figs. 8 are diagrams showing the configurations of main portions of the fuel cell according to Embodiment 2. Fig. 8(A) is a perspective view, and Fig. 8(B) is a cross-sectional view.
[Fig. 9] Fig. 9 is an exploded view showing a modification example of the connecting portion.
[Fig. 10] Fig. 10 is an exploded view showing another modification example of the connecting portion.
[Figs. 11] Figs. 11 are diagrams showing the configurations of main portions of the fuel cell according to Embodiment 3. Fig. 11 (A) is a perspective view, and Fig. 11 (B) is a cross-sectional view.
[Figs. 12] Figs. 12 are diagrams showing the configurations of main portions of the fuel cell according to Embodiment 4. Fig. 12(A) is a perspective view, and Fig. 12(B) is a cross-sectional view.
[Figs. 13] Figs. 13 are diagrams showing the configurations of main portions of the fuel cell according to Embodiment 5. Fig. 13(A) is a perspective view, and Fig. 13(B) is a cross-sectional view.
[Fig. 14] Fig. 14 is a perspective view showing the configuration of the fuel cell according to Embodiment 6.
[Fig. 15] Fig. 15 is a perspective view showing the configuration of the fuel cell according to Embodiment 7.
[Fig. 16] Fig. 16 is an exploded perspective view showing the configuration of a part of the fuel cell according to Embodiment 7.
[Fig. 17] Fig. 17 is a cross-sectional view showing the displacement restricting portion in Embodiment 7.
[Fig. 18] Fig. 18 is a cross-sectional view showing a modification example of the displacement restricting portion in Embodiment 7.
[Fig. 19] Fig. 19 is a cross-sectional view showing another modification example of the displacement restricting portion in Embodiment 7.

### Description of Embodiments

Hereinafter, preferred embodiments of the present invention will be explained in reference to the drawings. In the following embodiments, the present invention is applied to a polymer electrolyte fuel cell (PEFC). However, the present invention is widely applicable to the other types of fuel cells, such as a solid oxide fuel cell (SOFC) and a phosphoric acid fuel cell (PAFC).

### Embodiment 1

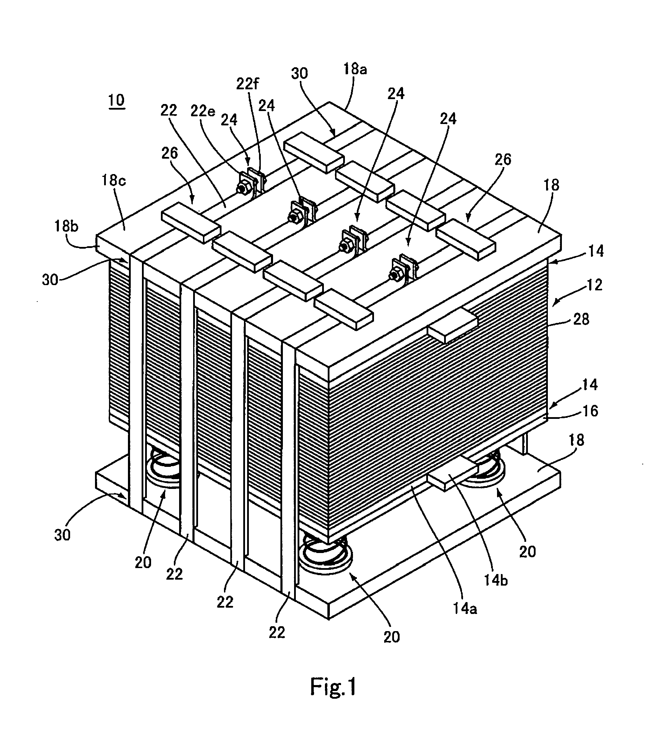

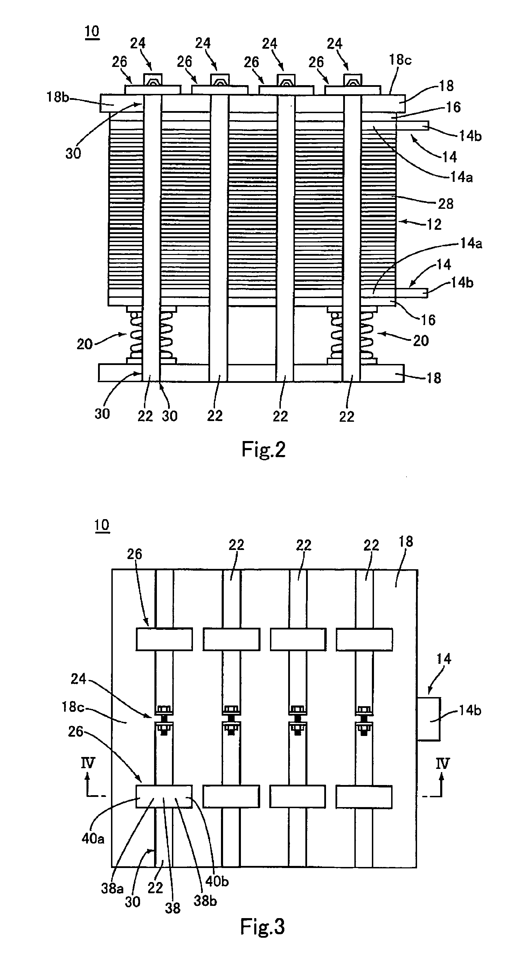

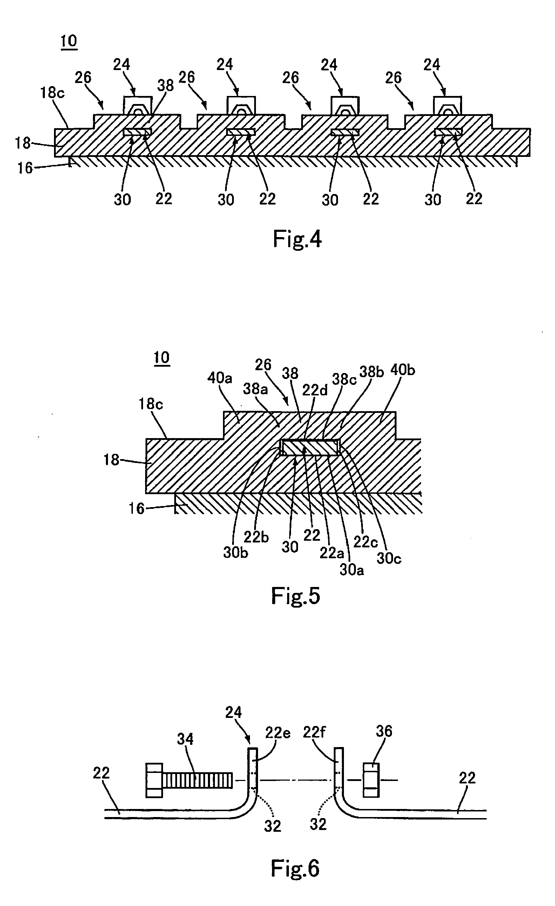

Fig. 1 is a perspective view showing the configuration of a fuel cell 10 according to Embodiment 1 of the present invention. Fig. 2 is a front view showing the configuration of the fuel cell 10. Fig. 3 is a plan view showing the configuration of the fuel cell 10. Fig. 4 is a partial cross-sectional view taken along line IV-IV of Fig. 3. Fig. 5 is a partially enlarged view of Fig. 4.

The fuel cell 10 (Figs. 1 to 3) is a polymer electrolyte fuel cell (PEFC) used in domestic cogeneration systems, motorcycles, electric cars, hybrid electric cars, and the like. As shown in Figs. 1 and 2, the fuel cell 10 includes: a cell stack 12; current collectors 14, insulating plates 16, and end plates 18, which are disposed on both sides of the cell stack 12 in a stack direction; compression springs 20 disposed between the insulating plate 16 the end plate 18 on one end side of the cell stack 12 in the stack direction; a plurality of (four in the present embodiment) fastening bands 22 configured to fasten these components; a connecting portion 24 (Figs. 1 and 3) configured to connect one end portion 22e and the other end portion 22f of the fastening band 22; and a displacement restricting portion 26 (Figs. 1 and 3) configured to restrict the displacement of the fastening band 22.

The cell stack 12 (Figs. 1 and 2) is a layer-built cell configured by stacking a plurality of cells (unit cells) 28 which generate an electromotive force and connecting these cells 28 with one another in series. Each of the cells 28 is a square plate shaped component formed such that an MEA (Membrane-Electrode Assembly) including an anode (fuel electrode), a cathode (air electrode), and a solid polymer membrane (ion-exchange membrane) sandwiched between the anode and the cathode is sandwiched between two electrically conductive separators (bipolar plates). The separators of the adjacent cells 28 contact each other, so that all the cells 28 are connected to one another in series.

Here, in order to stabilize the electromotive force of the cell 28, it is desirable that the anode (fuel electrode), the cathode (air electrode), and the solid polymer membrane (ion-exchange membrane) constituting the MEA (Membrane-Electrode Assembly) contact one another at an even surface pressure. Moreover, in order to maintain electrical connections among the cells 28, it is desirable that the cells 28 contact one another at a predetermined surface pressure. Therefore, in the fuel cell 10, a fastening mechanism including the end plates 18, the fastening bands 22, and the connecting portions 24 is designed such that these demands are satisfied.

As shown in Fig. 2, each of two current collectors 14 includes a square plate shaped power collecting portion 14a made of a gas impermeable and electrically conductive material, such as dense carbon or copper. An output terminal 14b is integrally formed at one side end edge of the power collecting portion 14a.

Each of two insulating plates 16 insulates a surface of the current collector 14 which surface faces the end plate 18. The insulating plate 16 is formed in a square plate shape by an insulating material, such as rubber or plastic.

Each of two end plates 18 applies the fastening power of the fastening band 22 to the cell stack 12 and the current collectors 14 at the even surface pressure. The end plate 18 is formed in a square plate shape by a high stiffness material, such as rigid plastic or copper, to prevent deformation by the fastening power. As shown in Figs. 1 and 2, the size of the end plate 18 is designed to be slightly larger than each of the size of the cell stack 12 and the size of the current collector 14. Therefore, the fastening band 22 hanged between a pair of end plates 18 is provided to be separated from the side surface of the cell stack 12 and the side surface of the current collector 14. On this account short-circuit of the cell stack 12 and the current collector 14 by the fastening band 22 does not occur.

In Embodiment 1, each of the cells 28, the current collectors 14, the insulating plates 16, and the end plates 18 is formed in the square plate shape. However, the shape is not especially limited and may be an oval plate shape, a hexagonal plate shape, or the like.

Then, as shown in Figs. 1 to 4, four groove-shaped concave portions 30 which accommodate the fastening bands 22 are formed in parallel with one another at regular intervals on two parallel side surfaces 18a and 18b and a surface 18c (Fig. 1) of the end plate 18.

The concave portion 30 positions the fastening band 22 and prevents a positioning error of the fastening band 22 in a width direction. As shown in Fig. 5, a cross-sectional shape of the concave portion 30 is designed to have a square shape including a bottom surface 30a facing (contacting) a lower surface 22a of the fastening band 22 and inner side surfaces 30b and 30c which respectively face side surfaces 22b and 22c of the fastening band 22. Moreover, the width of the concave portion 30 is designed to be slightly larger than the width of the fastening band 22, and the depth of the concave portion 30 is designed to be slightly larger than the thickness of the fastening band 22.

The compression spring 20 applies a pressing force in the stack direction to the stack body including the cell stack 12, the current collectors 14, and the like. As shown in Figs. 1 and 2, four compression springs 20 are disposed at positions corresponding to four corner portions of the cell stack 12.

The fastening band 22 is a band-shaped or linear member having a square cross section and configured to fasten the cell stack 12, the current collectors 14, the insulating plates 16, the end plates 18, and the compression springs 20 in the stack direction. The fastening band 22 is formed by a material, such as stainless steel (SUS304 or the like) or chromium molybdenum steel, which excels in tensile strength and rust prevention. Then, as shown in Fig. 6, through holes 32 constituting a part of the connecting portion 24 are respectively formed at the end portions 22e and 22f of the fastening band 22.

As described above, the thickness of the fastening band 22 is designed to be smaller than the depth of the concave portion 30 (Fig. 5). Therefore, when the fastening band 22 is accommodated in the concave portion 30, the fastening band 22 does not project from the surface 18c of the end plate 18, and the size of the fuel cell 10 does not increase by the thickness of the fastening band 22. The fastening band 22 does not have to be constituted by a single member extending over the entire length, and may be constituted by connecting a plurality of band-shaped or linear members with one another in a length direction.

The connecting portion 24 connects the end portion 22e and end portion 22f of the fastening band 22 on the surface 18c of the end plate 18. As shown in Fig. 6, the connecting portion 24 is constituted by the through holes 32 respectively formed at the end portions 22e and 22f of the fastening band 22, a bolt 34 inserted through the through holes 32, and a nut 36 threadedly engaging with the bolt 34. Therefore, a gap between the end portions 22e and 22f of the fastening band 22 can be adjusted by adjusting the length of thread engagement of the bolt 34 with respect to the nut 36. Thus, the fastening power of the fastening band 22 can be adjusted. The connecting portion 24 does not have to be provided on the surface 18c of the end plate 18. For example, the connecting portion 24 may be provided at a position facing a side surface spreading in a direction perpendicular to the stack direction of the cells 28 of the cell stack 12.

A displacement restricting portion 26 is formed integrally with the end plate 18 on which the connecting portion 24 is located. The displacement restricting portion 26 restricts the displacement of the fastening band 22 in a direction away from the surface 18c of the end plate 18. As shown in Figs. 3 and 5, the displacement restricting portion 26 has a flat facing surface 38c which faces at least a part of a surface 22d of the fastening band 22 (to be specific, which covers at least a part of the surface 22d of the fastening band 22). In addition, the displacement restricting portion 26 includes: a plate shaped facing portion 38 disposed to intersect with (herein, to be perpendicular to) the concave portion 30; and two coupling portions 40a and 40b configured to couple the end plate 18 and both end portions 38a and 38b of the facing portion 38 in a direction intersecting with the concave portion 30.

Then, two displacement restricting portions 26 are respectively provided on both sides of the connecting portion 24 to cover the fastening band 22. These two displacement restricting portions 26 restrict the displacement of the end portions 22e and 22f of the fastening band 22. The number of displacement restricting portions 26 for one fastening band 22 is not especially limited and may be one or three or more. In addition, the displacement restricting portion 26 does not have to be provided on the end plate 18 on which the connecting portion 24 is located. The displacement restricting portion 26 may be provided on the end plate 18 opposite to the end plate 18 on which the connecting portion 24 is located or may be provided on each of both end plates 18.

When assembling the fuel cell 10 (Figs. 1 to 3), first, the current collector 14, the insulating plate 16, and the end plate 18 are disposed on each of both sides of the cell stack 12 in the stack direction, and the compression springs 20 are provided between the insulating plate 16 and the end plate 18 which are located on one side. Then, while these components are being fastened by the fastening bands 22 in the stack direction, the end portion 22e and end portion 22f of each fastening band 22 are connected to each other by the connecting portion 24.

In order to apply the even surface pressure to the cell stack 12 and the current collectors 14, it is necessary to equalize the fastening powers of four fastening bands 22. Therefore, regarding the fastening band 22 which lacks the fastening power, the fastening power is increased by increasing the length of thread engagement of the bolt 34 with respect to the nut 36 (Fig. 6). In contrast, regarding the fastening band 22 which has the excessive fastening power, the fastening power is reduced by reducing the length of thread engagement of the bolt 34 with respect to the nut 36.

In a case where the connecting portion 24 loosens and the connection between the end portions 22e and 22f of the fastening band 22 is released or the fastening band 22 is cut on the surface 18c of the end plate 18 while the fuel cell 10 (Figs. 1 to 3) is being used or after the fuel cell 10 is discarded, "the elastic force of the cell stack 12", "the elastic force of the compression spring 20", and "the elastic force of the fastening band 22 itself" act on the fastening band 22, and a portion of the fastening band 22 which portion is located on the surface 18c of the end plate 18 intends to displace in the direction away from the surface 18c of the end plate 18 while displacing in such a direction that the gap between the end portions 22e and 22f widens.

However, since the displacement of the fastening band 22 in the direction away from the surface 18c of the end plate 18 is restricted by the displacement restricting portion 26, the fastening band 22 does not vigorously snap in such direction. Moreover, as can be imagined from Fig. 5, when the fastening band 22 displaces, the lower surface 22a of the fastening band 22 contacts the bottom surface 30a of the concave portion 30, the surface 22d of the fastening band 22 contacts the facing surface 38c of the facing portion 38, and the side surface 22b or 22c of the fastening band 22 contacts the inner side surface 30b or 30c of the concave portion 30. Therefore, the power of the displacement of the fastening band 22 weakens by the frictional forces generated by the surface contact. On this account, accidents caused by the snapped fastening band 22 can be surely prevented.

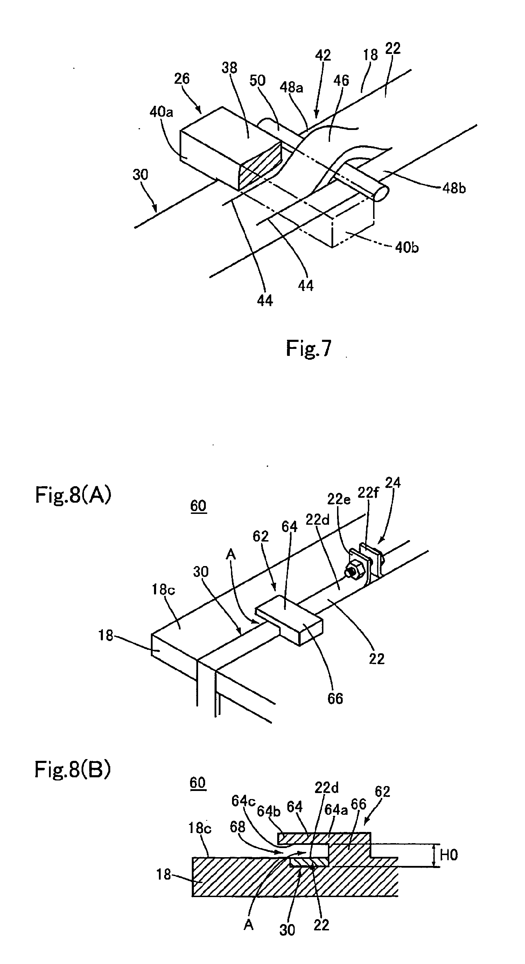

In Embodiment 1, the displacement of the fastening band 22 "in the direction away from the surface 18c of the end plate 18" is restricted by the displacement restricting portion 26, and the displacement of the fastening band 22 "in a direction parallel to the surface 18c of the end plate 18" and "in a direction perpendicular to the groove-shaped concave portion 30 (in the width direction of the fastening band 22))" is restricted by the inner side surfaces 30b and 30c of the concave portion 30. Further, by providing a stopper portion 42 shown in Fig. 7 on the fastening band 22, the displacement of the fastening band 22 "in the direction parallel to the surface 18c of the end plate 18" and "in a direction parallel to the groove-shaped concave portion 30 (in the length direction of the fastening band 22)) may also be restricted.

The stopper portion 42 (Fig. 7) is constituted by two linear slits 44 and a stopper rod 50. These two linear slits 44 extend in a longitudinal direction of the fastening band 22 on the fastening band 22 in parallel with each other. The stopper rod 50 is inserted through these two slits 44 while lifting up a center portion 46 of the fastening band 22 and is provided on surfaces of both end portions 48a and 48b sandwiching the center portion 46. Therefore, in the fuel cell 10 including the stopper portion 42, the stopper rod 50 or the center portion 46 of the fastening band 22 lifted up by the stopper rod 50 stops by the facing portion 38 of the displacement restricting portion 26 or by the coupling portions 40a and 40b of the displacement restricting portion 26, so that the displacement of the fastening band 22 "in the direction parallel to the surface 18c of the end plate 18" and "in the direction parallel to the groove-shaped concave portion 30 (in the length direction of the fastening band 22)" is restricted.

### Embodiment 2

Figs. 8(A) and 8(B) are respectively a perspective view and a cross-sectional view showing main portions of a fuel cell 60 according to Embodiment 2 of the present invention. The fuel cell 60 is the same in configuration as the fuel cell 10 (Fig. 1) according to Embodiment 1 except that the displacement restricting portion 26 of the fuel cell 10 is replaced with a displacement restricting portion 62.

The displacement restricting portion 62 is formed integrally with the end plate 18 on which the connecting portion 24 is located. The displacement restricting portion 62 restricts the displacement of the fastening band 22 in the direction away from the surface 18c of the end plate 18. The displacement restricting portion 62 includes: a planar facing surface 64c facing at least a part of the surface 22d of the fastening band 22; a plate shaped facing portion 64 disposed to intersect with (herein, be perpendicular to) the concave portion 30; and a coupling portion 66 configured to couple the end plate 18 and one end portion 64a of the facing portion 64 in a direction intersecting with the concave portion 30. Then, an introducing port 68 through which the fastening band 22 is introduced into the concave portion 30 is formed between the other end portion 64b of the facing portion 64 and the surface 18c of the end plate 18.

In accordance with Embodiment 2, the fastening band 22 disposed on the surface 18c of the end plate 18 can be moved in the width direction to be introduced through the introducing port 68 into the concave portion 30. Therefore, it is unnecessary to cause the end portion 22e or 22f of the fastening band 22 to pass through a lower space A of the facing portion 64. On this account, the fastening band 22 can be easily attached.

### Modification Example of Connecting Portion

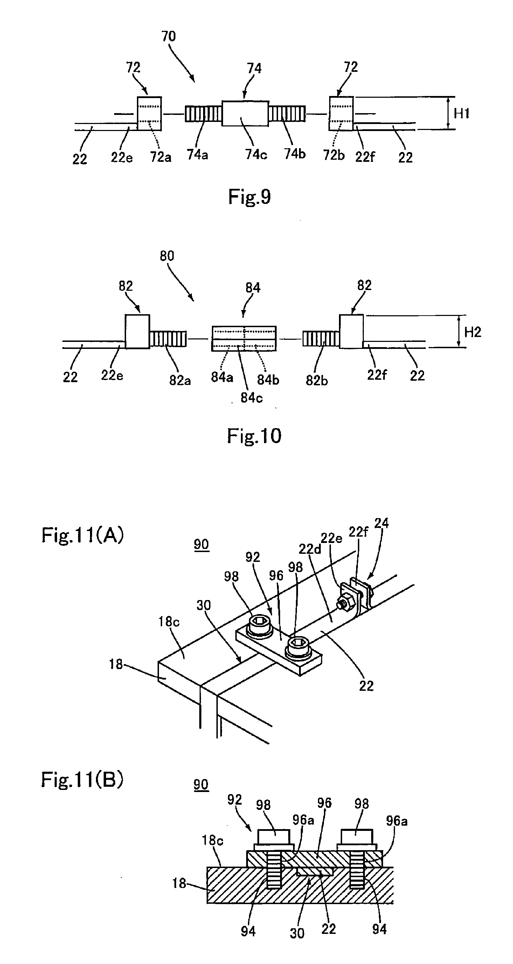

In Embodiment 2 (Fig. 8), since the height of the connecting portion 24 is not limited by a height H0 (Fig. 8(B)) of the lower space A, the degree of freedom of the design of "the connecting portion" can be improved. For example, a connecting portion 70 shown in Fig. 9 or a connecting portion 80 shown in Fig. 10 can be used.

As shown in Fig. 9, the connecting portion 70 is constituted by two internal screw members 72 respectively formed at the end portions 22e and 22f of the fastening band 22 and one external screw member 74 connecting these two internal screw members 72 each other.

One of the internal screw members 72 has an internal screw 72a extending in the longitudinal direction of the fastening band 22, and the other internal screw member 72 has an internal screw 72b extending in the longitudinal direction of the fastening band 22. The internal screw 72a and the internal screw 72b are formed to be opposite to each other. Moreover, the external screw member 74 includes two external screws 74a and 74b formed on the same straight line and a tool stopper portion 74c formed between these two external screws 74a and 74b and having a polygonal cross section (square shape in the present embodiment). The external screw 74a and the external screw 74b are formed to be opposite to each other. Then, the external screw 74a and the internal screw 72a threadedly engage with each other, and the external screw 74b and the internal screw 72b threadedly engage with each other. Therefore, by applying a tool (not shown) to the tool stopper portion 74c to rotate the external screw member 74, the length of thread engagement of the external screw 74a, 74b with respect to the internal screw 72a, 72b can be adjusted. Thus, the gap between the end portions 22e and 22f of the fastening band 22 can be adjusted.

As shown in Fig. 10, the connecting portion 80 includes two external screw members 82 respectively formed at the end portions 22e and 22f of the fastening band 22 and one internal screw member 84 connecting these two external screw members 82 each other.

One of the external screw members 82 has an external screw 82a extending in the longitudinal direction of the fastening band 22, and the other external screw member 82 has an external screw 82b extending in the longitudinal direction of the fastening band 22. The external screw 82a and the external screw 82b are formed to be opposite to each other. Moreover, the internal screw member 84 has two internal screws 84a and 84b formed on the same straight line and a tool stopper portion 84c formed on outer peripheral portions of these two internal screws 84a and 84b and having a polygonal cross section (hexagonal shape in the present embodiment). The internal screw 84a and the internal screw 84b are formed to be opposite to each other. Then, the internal screw 84a and the external screw 82a threadedly engage with each other, and the internal screw 84b and the external screw 82b threadedly engage with each other. Therefore, by applying a tool (not shown) to the tool stopper portion 84c to rotate the internal screw member 84, the length of thread engagement of the external screw 82a, 82b with respect to the internal screw 84a, 84b can be adjusted. Thus, the gap between the end portions 22e and 22f of the fastening band 22 can be adjusted.

In the case of using the connecting portion 70 (Fig. 9) or 80 (Fig. 10), by designing the internal screw member 72 and the external screw member 82 such that each of a height H1 (Fig. 9) of the internal screw member 72 and a height H2 (Fig. 10) of the external screw member 82 is higher than the height H0 (Fig. 8(B)) of the lower space A of the facing portion 64, each of the internal screw member 72 and the external screw member 82 can be stopped by the displacement restricting portion 62 (Fig. 8). Therefore, the displacement of the fastening band 22 "in the direction parallel to the surface 18c of the end plate 18" and "in the direction parallel to the groove-shaped concave portion 30 (in the length direction of the fastening band 22)" can be restricted. To be specific, in this case, each of the internal screw member 72 (Fig. 9) and the external screw member 82 (Fig. 10) can serve as the "stopper portion" instead of the stopper portion 42 (Fig. 7).

Needless to say, the stopper portion 42 (Fig. 7) can be used even in the case of using the connecting portion 70 (Fig. 9) or 80 (Fig. 10).

### Embodiment 3

Figs. 11(A) and 11(B) are respectively a perspective view and a cross-sectional view showing main portions of a fuel cell 90 according to Embodiment 3 of the present invention. The fuel cell 90 is the same in configuration as the fuel cell 10 (Fig. 1) according to Embodiment 1 except that the displacement restricting portion 26 of the fuel cell 10 is replaced with a displacement restricting portion 92.

The displacement restricting portion 92 includes screw holes 94, a plate shaped facing member 96, and two bolts 98. The screw holes 94 are respectively formed on both sides of the concave portion 30 on the surface 18c of the end plate 18. The plate shaped facing member 96 has two through holes 96a corresponding to the screw holes 94 and faces at least a part of the surface 22d of the fastening band 22. Each of the bolts 98 is inserted into the through hole 96a and threadedly engages with the screw hole 94.

In accordance with Embodiment 3, after the fastening band 22 is accommodated in the concave portion 30, the facing member 96 can be attached so as to cover the fastening band 22. Therefore, the facing member 96 does not become an obstacle when attaching the fastening band 22. Thus, the workability of attachment of the fastening band 22 can be improved.

### Embodiment 4

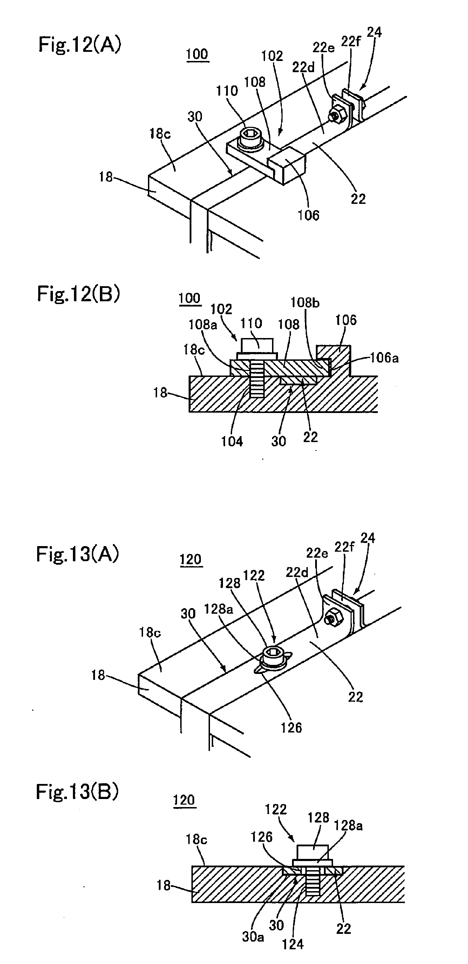

Figs. 12(A) and 12(B) are respectively a perspective view and a cross-sectional view showing main portions of the fuel cell 100 according to Embodiment 4 of the present invention. The fuel cell 100 is the same in configuration as the fuel cell 10 (Fig. 1) according to Embodiment 1 except that the displacement restricting portion 26 of the fuel cell 10 is replaced with a displacement restricting portion 102.

The displacement restricting portion 102 includes a screw hole 104, a stopper projecting portion 106, a facing member 108, and a bolt 110. The screw hole 104 is formed on the surface of the end plate 18 on one side of the concave portion 30 in the width direction. The stopper projecting portion 106 is formed integrally with the end plate 18 on the other side of the concave portion 30 in the width direction. The facing member 108 has a through hole 108a corresponding to the screw hole 104 and faces at least a part of the surface 22d of the fastening band 22. The bolt 110 is inserted through the through hole 108a and threadedly engages with the screw hole 104. Then, a stopper groove 106a is formed on a side surface of the stopper projecting portion 106 which surface faces the concave portion 30. Since one end portion 108b of the facing member 108 is stopped by the stopper groove 106a, the rotation of the facing member 108 about the bolt 110 is restricted.

In accordance with Embodiment 4, the facing member 108 can be easily attached to the end plate 18 only by one bolt 110.

### Embodiment 5

Figs. 13(A) and 13(B) are respectively a perspective view and a cross-sectional view showing main portions of a fuel cell 120 according to Embodiment 5 of the present invention. The fuel cell 120 is the same in configuration as the fuel cell 10 (Fig. 1) according to Embodiment 1 except that the displacement restricting portion 26 of the fuel cell 10 is replaced with a displacement restricting portion 122.

The displacement restricting portion 122 includes a screw hole 124, an elongate hole 126, and a bolt 128. The screw hole 124 is formed on the bottom surface 30a of the groove-shaped concave portion 30. The elongate hole 126 is formed on a center portion of the fastening band 22 in the width direction to extend in the longitudinal direction and corresponds to the screw hole 124. The bolt 128 is inserted through the elongate hole 126 and threadedly engages with the screw hole 124. A largest outer diameter of a head portion 128a of the bolt 128 is designed to be larger than a largest width of the elongate hole 126 such that the head portion 128a can cover at least a part of the surface 22d of the fastening band 22.

In accordance with Embodiment 5, the displacement of the fastening band 22 in any direction can be restricted by an extremely simple configuration using one bolt 128. Moreover, since the displacement of the fastening band 22 in the longitudinal direction is allowed to some extent in the elongate hole 126, it is possible to prevent the bolt 128 from becoming an obstacle when adjusting the gap between the end portions 22e and 22f of the fastening band 22.

### Embodiment 6

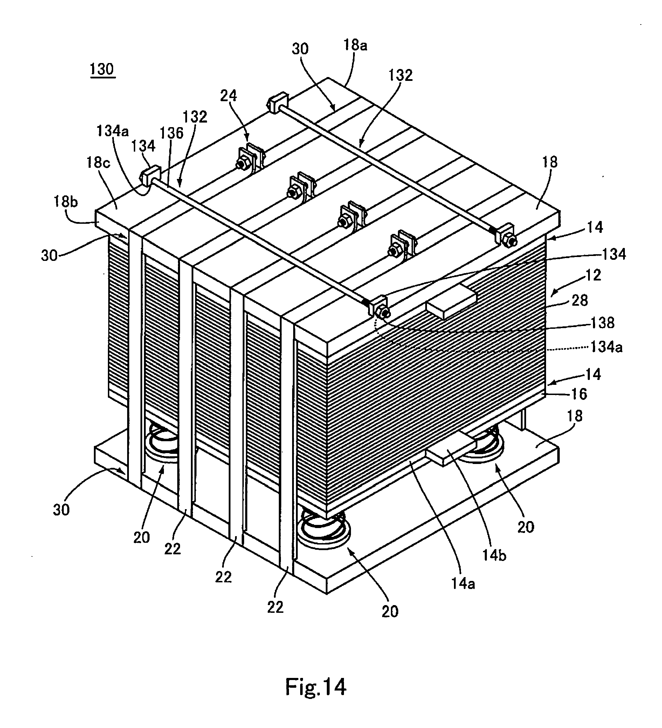

Fig. 14 is a perspective view showing a fuel cell 130 according to Embodiment 6 of the present invention. The fuel cell 130 is the same in configuration as the fuel cell 10 (Fig. 1) according to Embodiment 1 except that the displacement restricting portion 26 of the fuel cell 10 is replaced with a displacement restricting portion 132.

The displacement restricting portion 132 includes a pair of attaching portions 134, a bolt 136, and a nut 138. The attaching portions 134 respectively project on both end portions of the end plate 18 and respectively include through holes 134a facing each other. The bolt 136 is disposed to intersect with all the concave portions 30 and inserted through the through holes 134a of the pair of attaching portions 134. The nut 138 threadedly engages with the bolt 136.

In accordance with Embodiment 6, the displacement of all the fastening bands 22 can be easily restricted only by attaching the bolt 136 between the pair of attaching portions 134 after the fastening bands 22 are attached.

Needless to say, in Embodiment 3 to 6, the stopper portion 42 (Fig. 7), the connecting portion 70 (Fig. 9) or 80 (Fig. 10) can be used.

### Embodiment 7

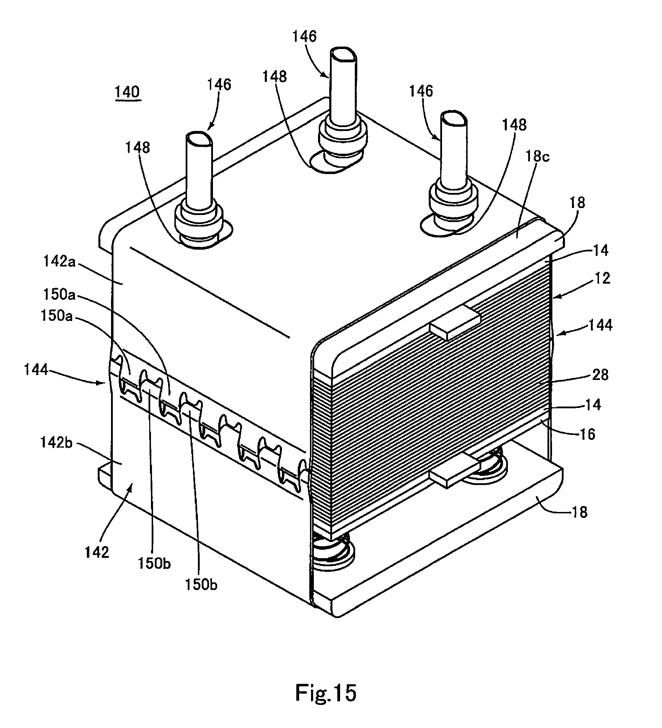

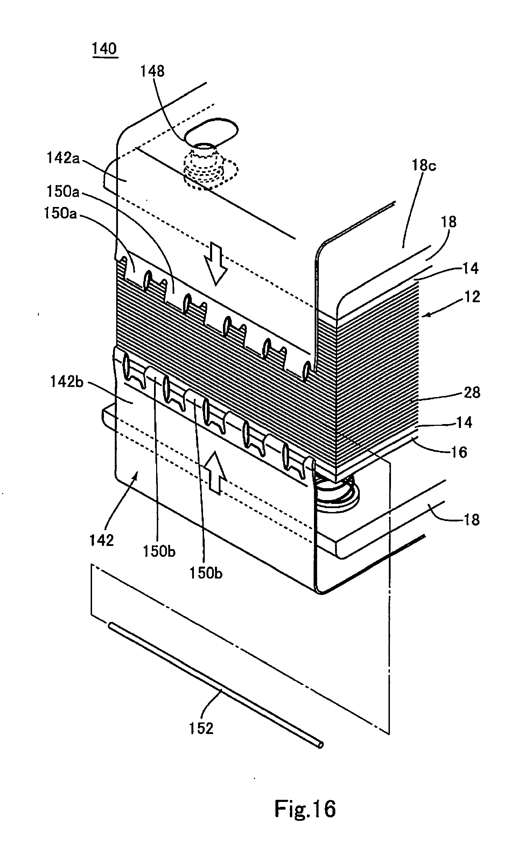

Fig. 15 is a perspective view showing a fuel cell 140 according to Embodiment 7 of the present invention. Fig. 16 is an exploded perspective view showing a part of the configuration of the fuel cell 140. In the fuel cell 140, a fastening band 142 is constituted by two band-shaped divided pieces 142a and 142b. Both end portions of the divided piece 142a in the length direction and both end portions of the divided piece 142b in the length direction are connected to each other by connecting portions 144 at positions other than the surface 18c of the end plate 18 (in Embodiment 7, positions facing the side surfaces of the cell stack 12 which surfaces are perpendicular to the stack direction of the cells 28). Moreover, three pipe members 146 each configured to supply a gas or a cooling medium to a plurality of cells 28 are connected to one of the end plates 18, and these pipe members 146 serve as "the displacement restricting portions" which restrict the displacement of the fastening band 142 in the direction away from the surface 18c of the end plate 18.

The width of each of the divided pieces 142a and 142b constituting the fastening band 142 is designed to be substantially the same as the width of the cell 28 such that the even surface pressure is applied to the cells 28 over the entire surfaces of the cells 28. The divided piece 142a has three holes 148 through which three pipe members 146 are respectively inserted and each of which is formed to have an oval shape extending in the length direction of the fastening band 142. Moreover, a plurality of tubular portions 150a extending in the width direction of the divided piece 142a are formed at both end portions of the divided piece 142a in the length direction so as to be spaced apart from one another in the width direction, and a plurality of tubular portions 150b extending in the width direction of the divided piece 142b are formed at both end portions of the divided piece 142b in the length direction so as to be spaced apart from one another in the width direction. Then, as shown in Fig. 15, the plurality of tubular portions 150b of the divided piece 142b are continuously provided among the plurality of tubular portions 150a of the divided piece 142a, and a coupling rod 152 (Fig. 16) is inserted through insides of the tubular portions 150a and 150b. With this, the divided piece 142a and the divided piece 142b are connected to each other.

To be specific, in Embodiment 7, the connecting portion 144 is constituted by the plurality of tubular portions 150a of the divided piece 142a, the plurality of tubular portions 150b of the divided piece 142b, and the coupling rod 152, and the fastening band 142 is constituted by connecting the divided piece 142a and the divided piece 142b using the connecting portion 144. Then, one end portion and the other end portion of the fastening band 142 in the length direction are connected to each other by the other connecting portion 144. In Embodiment 7, the fastening band 142 is constituted by two band-shaped divided pieces 142a and 142b. However, the fastening band 142 may be constituted by one band-shaped member or three or more band-shaped divided pieces.

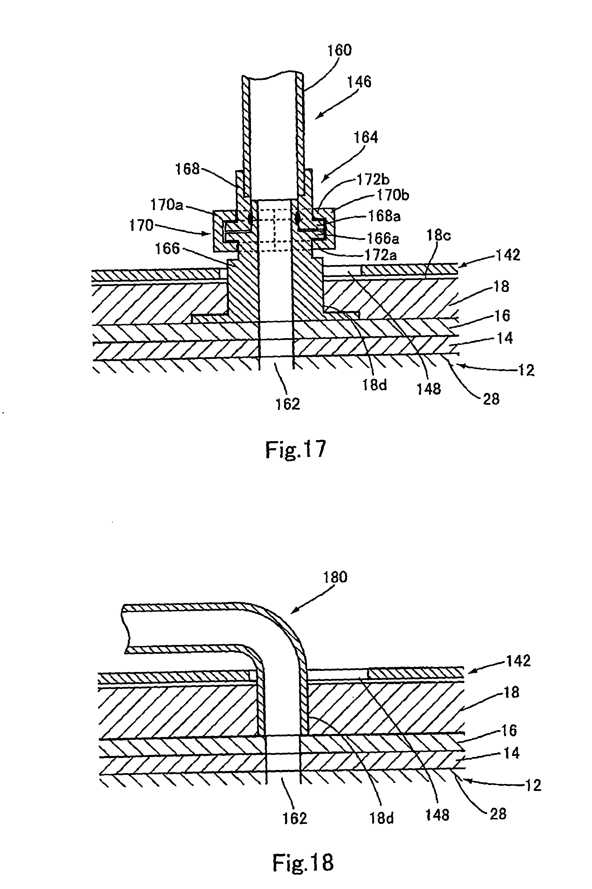

As shown in Fig. 17, each of three pipe members 146 includes a pipe 160 through which a gas or a cooling medium flows and a joint 164 configured to cause the pipe 160 to be communicated with a passage (a gas passage or a cooling medium passage) 162 in the cell stack 12. The joint 164 includes an end plate connecting portion 166, a pipe connecting portion 168, and a coupling member 170. The end plate connecting portion 166 is fixed to a through hole 18d of the end plate 18 by an adhesive or the like. The pipe connecting portion 168 is fixed to an end portion of the pipe 160 by an adhesive or the like. The coupling member 170 causes the end plate connecting portion 166 and the pipe connecting portion 168 to be detachably coupled to each other. The coupling member 170 is configured to have an annular shape by detachably connecting two divided pieces 170a and 170b divided in a diametrical direction. A stopper portion 172a configured to be stopped by a flange 166a of the end plate connecting portion 166 is formed at one axial end portion of each of the divided pieces 170a and 170b, and a stopper portion 172b configured to be stopped by a flange 168a of the pipe connecting portion 168 is formed at the other axial end portion of each of the divided pieces 170a and 170b.

The shape and outer diameter of a portion of the end plate connecting portion 166 which portion projects from the surface 18c of the end plate 18 are designed such that this portion can be inserted through the hole 148 of the fastening band 142. The shape and outer diameter of the coupling member 170 are designed such that a part of the coupling member 170 can face at least a part of a surface of the fastening band 142. Therefore, in a state where the end plate connecting portion 166 is inserted through the hole 148 of the fastening band 142, and the end plate connecting portion 166 and the pipe connecting portion 168 are connected to each other by the coupling member 170, the fastening band 142 can be provided along the surface 18c of the end plate 18, and the displacement of the fastening band 142 in the direction away from the surface 18c of the end plate 18 can be restricted by a part (that is, the facing portion) of the coupling member 170.

In Embodiment 7, the end plate connecting portion 166 is fixed to the through hole 18d by an adhesive or the like. However, the end plate connecting portion 166 may be detachably connected to the through hole 18d by a screw structure or the like. In this case, after the fastening band 142 is provided along the surface 18c of the end plate 18, the end plate connecting portion 166 can be attached to the through hole 18d. Therefore, a part of the end plate connecting portion 166 can be designed so as to be able to face at least a part of the surface of the fastening band 142, and the displacement of the fastening band 142 in the direction away from the surface 18c of the end plate 18 can be restricted by a part (that is, the facing portion) of the end plate connecting portion 166.

Moreover, the type of the "joint" configured to cause the pipe 160 to be communicated with the passage 162 in the cell stack 12 is not especially limited. Instead of the joint 164 (Fig. 17), a known "joint" may be suitably selected and used.

Further, the number of pipe members 146 is not especially limited and may be one, two, or four or more.

### Modification Example of Pipe Member

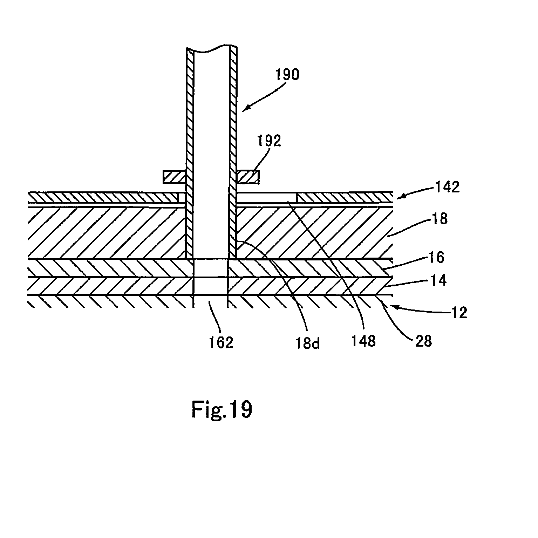

For example, the pipe member 180 shown in Fig. 18 or the pipe member 190 shown in Fig. 19 may be used as "the pipe member" constituting at least a part of "the displacement restricting portion".

As shown in Fig. 18, the pipe member 180 is a "pipe" which is bend in a substantially L shape, an end portion of the pipe member 180 is connected to the through hole 18d of the end plate 18, and a part of the pipe member 180 is provided along the surface 18c of the end plate 18. Therefore, in this modification example, a part of the pipe member 180 is provided to face at least a part of the surface of the fastening band 142, and the displacement of the fastening band 142 in the direction away from the surface 18c of the end plate 18 can be restricted by a part (that is, the facing portion) of the pipe member (pipe) 180. To be specific, the pipe member (pipe) 180 has the function of "the displacement restricting portion".

As shown in Fig. 19, the pipe member 190 is a substantially straight "pipe", and an end portion of the pipe member 190 is connected to the through hole 18d of the end plate 18. Then, an annular (or projecting) facing member 192 is attached to an outer peripheral surface of the pipe member 190. The shape and outer diameter of the facing member 192 are designed such that the facing member 192 can face at least a part of the surface of the fastening band 142. Therefore, in this modification example, the displacement of the fastening band 142 in the direction away from the surface 18c of the end plate 18 can be restricted by the facing member 192. To be specific, the pipe member (pipe) 190 and the facing member 192 have the function of "the displacement restricting portion".

### Method for Disassembling Fuel Cell

In the fuel cells 90 (Fig. 11), 100 (Fig. 12), 120 (Fig. 13), and 130 (Fig. 14) according to Embodiments 3 to 6 and the mode (Fig. 19) using the facing member 192 of the fuel cell 140 (Fig. 15) according to Embodiment 7, after one end portion and the other end portion of the fastening band 22, 142 are connected to each other by the connecting portion 24, 70, 80, 144, the displacement restricting portion 92, 102, 122, 132 or the facing member 192 as "the displacement restricting portion" can be configured. Therefore, the displacement restricting portion can be configured when manufacturing the fuel cell and when disassembling the fuel cell.

To be specific, when disassembling the fuel cells 90, 100, 120, 130, and 140 according to Embodiments 3 to 7, it is possible to adopt "a fuel cell disassembling method" including the steps of (a) disposing on at least one of two end plates 18 the displacement restricting portion 92, 102, 122, 132 or the facing member 192 configured to restrict the displacement of the fastening band 22, 142 in the direction away from the surface 18c of the end plate 18; and (b) releasing the connection between one end portion and the other end portion of the fastening band 22, 142 at the connecting portion 24, 70, 80, 144 while restricting the displacement of the fastening band 22, 142 by the displacement restricting portion 92, 102, 122, 132 or the facing member 192.

In accordance with this "fuel cell disassembling method", the displacement restricting portion can be disposed on the end plate 18 only when disassembling the fuel cell. Therefore, it is unnecessary to dispose the displacement restricting portion on the end plate 18 in advance, and the manufacturing cost of the fuel cell can be reduced.

### Reference Signs List

- A:: lower space
- 10, 60, 90, 100, 120, 130, 140:: fuel cell
- 12:: cell stack
- 14:: current collector
- 16:: insulating plate
- 18:: end plate
- 20:: compression spring
- 22:: fastening band
- 24, 70, 80:: connecting portion displacement restricting portion
- 146, 180, 190:: pipe member (displacement restricting portion)
- 28:: cell
- 30:: concave portion
- 38, 64:: facing portion
- 96, 108, 192:: facing member
- 40a, 40b, 66:: coupling portion
- 42:: stopper portion

## Claims

1. A fuel cell comprising:
a cell stack configured by stacking a plurality of cells;
two end plates respectively disposed on both sides of the cell stack in a stack direction;
a fastening band configured to fasten the cell stack and the end plates in the stack direction;
a connecting portion configured to connect one end portion and the other end portion of the fastening band; and
a displacement restricting portion provided on at least one of the end plates to restrict displacement of the fastening band in a direction away from a surface of the end plate.

2. The fuel cell according to claim 1, wherein a groove-shaped concave portion is formed on a surface of at least one of the end plates, and the fastening band is disposed to fit in the concave portion.

3. The fuel cell according to claim 1 or 2, wherein the displacement restricting portion is formed to cover at least a part of a surface of the fastening band.

4. The fuel cell according to claim 3, wherein the displacement restricting portion is formed integrally with the end plate.

5. The fuel cell according to claim 3, wherein the fastening band is provided with a stopper portion configured to be stopped by the displacement restricting portion to restrict the displacement of the fastening band in a direction parallel to the surface of the end plate.

6. The fuel cell according to claim 3, wherein the connecting portion is provided with a stopper portion configured to be stopped by the displacement restricting portion to restrict the displacement of the fastening band in a direction parallel to the surface of the end plate.

7. The fuel cell according to claim 1, wherein:
a groove-shaped concave portion having a square cross section is formed on a surface of at least one of the end plates;
the fastening band is a band-shaped member having a square cross section and disposed to fit in the concave portion; and
the displacement restricting portion includes a facing portion having a planar facing surface facing at least a part of a surface of the fastening band and two coupling portions configured to couple the end plate and both end portions of the facing portion in a direction intersecting with the concave portion.

8. The fuel cell according to claim 1, wherein:
a groove-shaped concave portion having a square cross section is formed on a surface of at least one of the end plates;
the fastening band is a band-shaped member having a square cross section and disposed to fit in the concave portion;
the displacement restricting portion includes a facing portion having a planar facing surface facing at least a part of a surface of the fastening band and a coupling portion configured to couple the end plate and one end portion of the facing portion in a direction intersecting with the concave portion; and
an introducing port through which the fastening band is introduced into the concave portion is formed between the other end portion of the facing portion and the surface of the end plate.

9. The fuel cell according to any one of claims 1 to 6, wherein:
a pipe member through which a gas or a cooling medium is supplied to the plurality of cells is connected to at least one of the end plates; and
at least a part of the displacement restricting portion is constituted by the pipe member.

10. The fuel cell according to claim 9, wherein the pipe member is a pipe or a pipe joint having a facing portion facing at least a part of the surface of the fastening band.

11. The fuel cell according to claim 9, wherein:
the pipe member is a pipe or a pipe joint; and
a facing member facing at least a part of the surface of the fastening band is attached to the pipe or the pipe joint.

12. A method for disassembling a fuel cell including a cell stack configured by stacking a plurality of cells, two end plates respectively disposed on both sides of the cell stack in a stack direction, a fastening band configured to fasten the cell stack and the end plates in the stack direction, and a connecting portion configured to connect one end portion and the other end portion of the fastening band,
the method comprising the steps of:
disposing on at least one of the end plates a displacement restricting portion configured to restrict displacement of the fastening band in a direction away from a surface of the end plate; and
releasing the connection between said one end portion and the other end portion of the fastening band at the connecting portion while restricting the displacement of the fastening band by the displacement restricting portion.
